# EUROPEAN PATENT APPLICATION

(11) **EP 2 447 907 A1**
(43) Date of publication of application: **02.05.2012**
(21) Application number: 10792040.7
(22) Date of filing: 21.06.2010
(51) Int. Cl.: G06Q 50/00, G06Q 10/00, G06Q 30/00

(54) **RESERVATION INFORMATION AGGREGATION DEVICE, RESERVATION INFORMATION AGGREGATION METHOD, SERVER, TRIP RESERVATION STATUS DISCLOSURE METHOD, PROGRAM, AND RECORDING MEDIUM**

(30) Priority: 22.06.2009 JP 2009148128
(71) Applicant: Rakuten, Inc., Tokyo 140-0002 (JP)
(72) Inventor: NAGASHIMA, Hisanori, Tokyo 140-0002 (JP); SAITO, Keisuke, Tokyo 140-0002 (JP); JUN, Minsoo, Tokyo 140-0002 (JP); NAKAMURA, Kaori, Tokyo 140-0002 (JP); YOSHIDA, Kumiko, Tokyo 140-0002 (JP)
(74) Representative: HOFFMANN EITLE
(86) International application number: PCT/JP2010/060428
(87) International publication number: WO 2010/150722

(57) **Abstract**

An optional tour agency organizing optional tours that are combined with an airline ticket-hotel reservation package at a customer's discretion is provided with booking state information. Optional tour agencies located in various places and organizing optional tours refer to a booking information aggregating device for travel booking information. Each optional tour agency accesses the booking information aggregating device (101) from a terminal device (102) to refer to booking information under specified extraction conditions. The booking information aggregating device (101) sends a result of aggregation performed under the extraction conditions to the terminal device.

## Description

### TECHNICAL FIELD

The present invention relates to a booking information aggregating device, a booking information aggregating method, a server, a travel booking state disclosing method, a program, and a storage medium which are used to aggregate booking information of travel plans.

### BACKGROUND ART

Patent Document 1 titled "Travel Reservation Support System, Travel Reservation Method and Server Device" discloses a travel reservation support system which utilizes a web site to greatly expand the degree of freedom in choice for users and has high operability to enable users to book an inexpensive package tour in a short time.

This reservation system, however, is only for reserving an airline ticket and lodging facilities in combination, and cannot be used to book an optional tour.

Generally speaking, a package tour provides a given airline ticket, a given hotel, and a given optional tour service in a bundle, and does not allow customers (travelers) to combine an airline ticket, hotel, and optional service of their choice.

In order to provide a comprehensive travel service in which a package of an airline ticket and lodging facilities is combined with an optional tour selected at a customer's discretion, it is important that optional tour agencies organizing optional tours collect accurate information.

### Prior Art Document

### Patent Document

Patent Document 1: JP2006-146439A

### DISCLOSURE OF THE INVENTION

### Problems to be Solved by the Invention

An object of the present invention is therefore to provide a booking information aggregating device, a booking information aggregating method, a server, a method, a program, and a storage medium which can be used to present booking state information to optional tour agencies planning and conducting optional tours that are combined at a customer's discretion with travel booking information including a destination.

### Means for Solving the Problems

A booking information aggregating device according to the present invention is connected to a terminal device, and includes: an identification information receiving section for receiving identification information of an optional tour agency which is sent from the terminal device; an area search section for searching an optional tour guide agency table for an optional tour agency that is associated with the identification information received by the identification information receiving section, and for an area of an optional tour organized by the optional tour agency, the optional tour agency table being provided inside or outside the booking information aggregating device; a booking information search section for searching, with the area found as a result of the search by the area search section as an extraction condition, a travel booking table for travel booking information that at least contains a travel destination matching the searched area, the travel booking table being provided inside or outside the booking information aggregating device; an aggregation section for aggregating pieces of travel booking information found as a result of the search by the booking information search section; and an output section for sending a result of the travel booking information aggregation executed by the aggregation section to the terminal device.

The booking information aggregating device further includes an optional tour agency authentication section for authenticating an optional tour agency that accesses from the terminal device, and for identifying an optional tour agency code, based on the identification information received by the identification information receiving section. The travel booking table stores travel booking information including a destination. The optional tour agency table stores an optional tour agency code in association with an area of an optional tour organized by the optional tour agency. The booking information search section reads, out of the optional tour agency table, an area that is associated with an optional tour agency code identified by the optional tour agency authentication section, and the read area is included in the extraction conditions.

The booking information aggregating device further includes an extraction condition receiving section for receiving extraction conditions other than an area from the terminal device.

The travel booking table includes optional tour booking in each piece of travel booking information. The extraction condition receiving section can set as an extraction condition booking no optional tour. When booking no optional tour is set as an extraction condition, the aggregation section searches the travel booking table for travel booking information that has a destination matching the searched area and that has no optional tour booked, and aggregates pieces of travel booking information that are found as a result of the search.

The travel booking table includes a starting date and a home arrival date in each piece of travel booking information. The extraction condition receiving section receives a length of visit as one of the extraction conditions. The aggregation section searches the travel booking table for travel booking information whose destination matches the searched area and whose starting date and home arrival date translate into a length of visit that matches the length of visit of the extraction conditions, and aggregates pieces of travel booking information that are found as a result of the search.

The extraction condition receiving section can set classification among adult males, adult females, and children as aclassificationitem. When classification among adult males, adult females, and children is set as a classification item, the aggregation section refers to a participant table, which is provided inside or outside the booking information aggregating device to store, for each participant, in association with a piece of travel booking information, whether the participant is an adult or a child and whether the participant is a male or a female, and aggregates adult male participants, adult female participants, and child participants that are associated with the found pieces of travel booking information to obtain an adult male count, an adult female count, and a child count.

The travel booking table includes an airline seat class and a participant count in each piece of travel booking information. The extraction condition receiving section can set classification among airline seat classes as a classification item. When classification among airline seat classes is set as a classification item, the aggregation section aggregates, for each airline seat class contained in the found pieces of travel booking information, participants reserving the airline seat class to obtain a participant count for each airline seat class.

The travel booking table includes an outward flight name and a participant count in each piece of travel booking information. The extraction condition receiving section can set classification among outward flight arrival time zones as a classification item. When classification among outward flight arrival time zones is set as a classification item, the aggregation section determines an outward flight arrival time from an outward flight name contained in each of the found pieces of travel booking information, and aggregates participants for each outward flight arrival time zone.

The travel booking table includes a return flight name and a participant count in each piece of travel booking information. The extraction condition receiving section can set classification among return flight departure time zones as a classification item. When classification among return flight departure time zones is set as a classification item, the aggregation section determines a return flight departure time from a return flight name contained in each of the found pieces of travel booking information, and aggregates participants for each return flight departure time zone.

A booking information aggregating method according to the present invention is for aggregating booking information in a network system where a booking information aggregating device and a terminal device are connected via a network, and includes: an identification information receiving step of receiving, by way of the booking information aggregating device, identification information of an optional tour agency which is sent from the terminal device; an area search step of searching, by way of the booking information aggregating device, an optional tour agency table for an optional tour agency that is associated with the identification information received in the identification information receiving step, and for an area of an optional tour organized by the optional tour agency, the optional tour agency table being provided inside or outside the booking information aggregating device; a booking information search step of searching, by way of the booking information aggregating device, with the area found as a result of the search in the area search step as an extraction condition, a travel booking table for travel booking information that at least contains a travel destination matching the searched area, the travel booking table being provided inside or outside the booking information aggregating device; an aggregation step of aggregating, by way of the booking information aggregating device, pieces of travel booking information found as a result of the search in the booking information search step; and an output step of sending, by way of the booking information aggregating device, a result of the travel booking information aggregation executed in the aggregation step to the terminal device.

A program according to the present invention causes a computer which serves as a booking information aggregating device connected to a terminal device to function as: an identification information receiving section for receiving identification information of an optional tour agency which is sent from the terminal device; an area search section for searching an optional tour agency table for an optional tour agency that is associated with the identification information received by the identification information receiving section, and for an area of an optional tour organized by the optional tour agency, the optional tour agency table being provided inside or outside the booking information aggregating device; a booking information search section for searching, with the area found as a result of the search by the area search section as an extraction condition, a travel booking table for travel booking information that at least contains a travel destination matching the searched area, the travel booking table being provided inside or outside the booking information aggregating device; an aggregation section for aggregating pieces of travel booking information found as a result of the search by the booking information search section; and an output section for sending a result of the travel booking information aggregation executed by the aggregation section to the terminal device.

A storage medium according to the present invention has recorded thereon a program for causing a computer which serves as a booking information aggregating device connected to a terminal device to function as: an identification information receiving section for receiving identification information of an optional tour agency which is sent from the terminal device; an area search section for searching an optional tour agency table for an optional tour agency that is associated with the identification information received by the identification information receiving section, and for an area of an optional tour organized by the optional tour agency, the optional tour agency table being provided inside or outside the booking information aggregating device; a booking information search section for searching, with the area found as a result of the search by the area search section as an extraction condition, a travel booking table for travel booking information that at least contains a travel destination matching the searched area, the travel booking table being provided inside or outside the booking information aggregating device; an aggregation section for aggregating pieces of travel booking information found as a result of the search by the booking information search section; and an output section for sending a result of the travel booking information aggregation executed by the aggregation section to the terminal device.

A server according to the present invention is connectable to a local tour guide agency terminal and includes:
(1) a travel booking table for storing travel booking information including a destination;
(2) a local tour guide agency table for storing a local tour guide agency code in association with a guided area of a local tour organized by a local tour guide agency;
(3) a local tour guide agency authentication section for authenticating a local tour guide agency that accesses from the local tour guide agency terminal, and for identifying a local tour guide agency code;
(4) a bookings aggregating section for obtaining a booking state by reading a guided area that is associated with the identified local tour guide agency code from the local tour guide agency table, by searching the travel booking table under extraction conditions, which include the read guided area, for travel booking information that at least contains a destination matching the guided area, and by aggregating pieces of travel booking information that are found as a result of the search; and
(5) a booking state outputting section for returning the booking state that is obtained as a result of the aggregation to the local tour guide agency terminal.

A travel booking state disclosing method according to the present invention is executed by a server connectable to a local tour guide agency terminal and including: a travel booking table for storing travel booking information including a destination; and a local tour guide agency table for storing a local tour guide agency code in association with a guided area of a local tour organized by a local tour guide agency, and includes:
(1) a local tour guide agency authentication step of authenticating a local tour guide agency that accesses from the local tour guide agency terminal, and identifying a local tour guide agency code;
(2) a bookings aggregating step of obtaining a booking state by reading a guided area that is associated with the identified local tour guide agency code from the local tour guide agency table, searching the travel booking table under extraction conditions, which include the read guided area, for travel booking information that at least contains a destination matching the guided area, and aggregating pieces of travel booking information that are found as a result of the search; and
(3) a booking state outputting step of returning the booking state that is obtained as a result of the aggregation to the local tour guide agency terminal.

The travel booking state disclosing method further includes an extraction condition receiving step of receiving extraction conditions other than a guided area from the local tour guide agency terminal.

A program according to the present invention causes a computer, which serves as a server connectable to a local tour guide agency terminal and including: a travel booking table for storing travel booking information including a destination; and a local tour guide agency table for storing a local tour guide agency code in association with a guided area of a local tour organized by a local tour guide agency, to execute:
(1) a local tour guide agency authentication procedure of authenticating a local tour guide agency that accesses from the local tour guide agency terminal, and identifying a local tour guide agency code;
(2) a bookings aggregating procedure of obtaining a booking state by reading a guided area that is associated with the identified local tour guide agency code from the local tour guide agency table, by searching the travel booking table under extraction conditions, which include the read guided area, for travel booking information that at least contains a destination matching the guided area, and by aggregating pieces of travel booking information that are found as a result of the search; and
(3) a booking state outputting procedure of returning the booking state that is obtained as a result of the aggregation to the local tour guide agency terminal.

The program further causes the computer, which serves as the server, to execute an extraction condition receiving procedure of receiving extraction conditions other than a guided area from the local tour guide agency terminal.

A storage medium according to the present invention has recorded thereon a program for causing a computer, which serves as a server connectable to a local tour guide agency terminal and including: a travel booking table for storing travel booking information including a destination; and a local tour guide agency table for storing a local tour guide agency code in association with a guided area of a local tour organized by a local tour guide agency, to execute:
(1) a local tour guide agency authentication procedure of authenticating a local tour guide agency that accesses from the local tour guide agency terminal, and identifying a local tour guide agency code;
(2) a bookings aggregating procedure of obtaining a booking state by reading a guided area that is associated with the identified local tour guide agency code from the local tour guide agency table, by searching the travel booking table under extraction conditions, which include the read guided area, for travel booking information that at least contains a destination matching the guided area, and by aggregating pieces of travel booking information that are found as a result of the search; and
(3) a booking state outputting procedure of returning the booking state that is obtained as a result of the aggregation to the local tour guide agency terminal.

The program recorded in the storage medium further causes the computer, which serves as the server, to execute an extraction condition receiving procedure of receiving extraction conditions other than a guided area from the local tour guide agency terminal.

### EFFECT OF THE INVENTION

According to an aspect of the present invention, an optional tour agency can obtain travel booking information by aggregating bookings under a specified collection condition.

### BRIEF DESCRIPTION OF THE DRAWINGS

In the accompanying drawings:
FIG. 1 is a diagram outlining the network of a travel booking state disclosing system;
FIG. 2 is a diagram illustrating the flow of travel booking processing which is executed by a travel agency server;
FIG. 3 is a diagram illustrating a travel agency server configuration that is relevant to travel booking;
FIG. 4 is a diagram illustrating the flow of travel service selecting processing;
FIG. 5 is a diagram illustrating the configuration of a travel service selecting section;
FIG. 6 is a diagram illustrating an example of an airline ticket reservation area in a travel service selecting screen;
FIG. 7 is a diagram illustrating an example of a local tour booking area in the travel service selecting screen;
FIG. 8 is a diagram illustrating an example of a hotel reservation area in the travel service selecting screen;
FIG. 9 is a diagram illustrating an example of a travel booking table;
FIG. 10 is a diagram illustrating an example of a participant table;
FIG. 11 is a diagram illustrating the flow of travel booking state reference processing which is executed by the travel agency server;
FIG. 12 is a diagram illustrating a travel agency server configuration that is relevant to travel booking state reference;
FIG. 13 is a diagram illustrating an example of a local tour guide agency table;
FIG. 14 is a diagram illustrating an example of an extraction condition specifying screen;
FIG. 15 is a diagram illustrating an example of a booking state screen that has adult (M/F)/child as a classification item;
FIG. 16 is a diagram illustrating the flow of bookings aggregating processing for obtaining the booking state;
FIG. 17 is a diagram illustrating the flow of booking extraction determining processing;
FIG. 18 is a diagram illustrating an example of a booking state screen that has airline seat class as a classification item;
FIG. 19 is a diagram illustrating an example of a booking state screen that has outward flight arrival time zone as a classification item; and
FIG. 20 is a diagram illustrating an example of a booking state screen that has return flight departure time zone as a classification item.

### BEST MODE FOR CARRYING OUT THE INVENTION

In embodiments of the present invention, a customer (traveler) requests a travel agency to book an airline ticket-hotel package and to book a local tour selected at the customer's discretion, while a local tour guide agency organizing local tours at the destination of this trip refers to the travel agency for the booking state of a travel service.

### [First Embodiment]

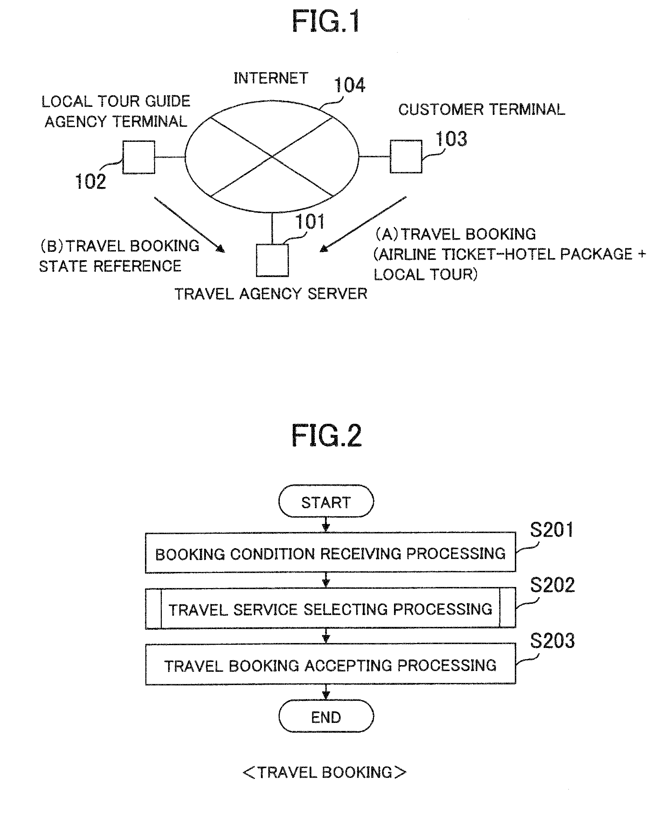

FIG. 1 is a diagram outlining the network of a travel booking state disclosing system (booking information aggregating system). A travel agency server (booking information aggregating device) 101 is connected via the Internet to a local tour guide agency terminal (terminal device) 102 and a customer (traveler) terminal 103. The travel agency server 101 is a server for assisting the operations of a travel agency which mediates, plans, organizes, and sells travel services including transportation, lodging, and others. The travel agency server 101 in this system particularly handles package reservation of an airline ticket and a hotel (an example of lodging facilities) and booking of a local tour that can be set at a customer's discretion. The local tour guide agency terminal 102 is a terminal used by a local tour guide agency (optional tour guide agency) which organizes a local tour at the destination of a traveler. The customer terminal 103 is a terminal used by a customer (traveler) who requests to book a travel service. The local tour guide agency terminal 102 and the customer terminal 103 each have a browser installed therein. A travel service includes an airline ticket-lodging package, which includes making arrangements for an airline ticket and for a hotel room, and making arrangements for a local tour, which is sold in accompaniment with the package.

The travel booking state disclosing system performs the following processing:
(A) A customer accesses the travel agency server 101 from the customer terminal 103 to book a travel service.
(B) A local tour guide agency accesses the travel agency server 101 from the local tour guide agency terminal 102 to refer to the booking state of the travel service and to inspect aggregation results.

The processing (A) "travel booking requested by a customer" is described first with reference to FIGS. 2 to 10.

FIG. 2 is a diagram illustrating the flow of travel booking processing which is executed by the travel agency server. A customer accesses the travel agency server 101 from the customer terminal 103. Accessed by the customer terminal 103, the travel agency server 101 receives travel booking conditions through booking condition receiving processing (S201), prompts the customer to select a travel service including a flight, a hotel, a local tour, and the like through travel service selecting processing (S202), and accepts to book a travel service selected by the customer through travel booking accepting processing (S203).

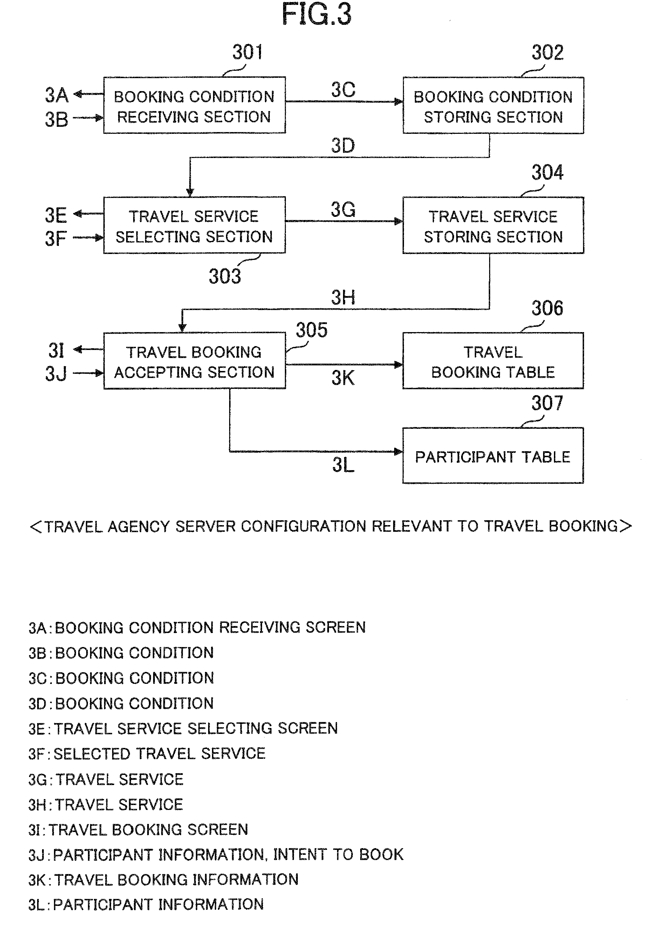

FIG. 3 is a diagram illustrating a travel agency server configuration that is relevant to travel booking. In FIG. 3, 3A is "BOOKING CONDITION RECEIVING SCREEN", 3B is "BOOKING CONDITION", 3C is "BOOKING CONDITION", 3D is "BOOKING CONDITION", 3E is "TRAVEL SERVICE SELECTING SCREEN", 3F is "SELECTED TRAVEL SERVICE", 3G is "TRAVEL SERVICE", 3H is "TRAVEL SERVICE", 3I is "TRAVEL BOOKING SCREEN", 3J is "PARTICIPANT INFORMATION, INTENT TO BOOK", 3K is "TRAVEL BOOKING INFORMATION", and 3L is "PARTICIPANT INFORMATION". A booking condition receiving section 301 executes the booking condition receiving processing (S201) of FIG. 2. Specifically, the booking condition receiving section 301 operates to send a booking condition receiving screen for prompting the customer to enter conditions about an airline ticket-lodging package to the customer terminal 103, receive conditions about an airline ticket-lodging package that are entered in the booking condition receiving screen displayed on a browser of the customer terminal 103, and store the received conditions in a booking condition storing section 302.

The booking condition receiving screen is configured such that a customer can select from options, or enter, a starting date, a returning date (home arrival date), a starting location, a destination, the number of party members, how many rooms are to be reserved, an airline company, and an airline seat class. The booking condition receiving screen is also configured such that the party member count entered is itemized into the number of adults, the number of children (who require separate beds), the number of children (who do not require separate beds), and the number of infants.

The booking condition storing section 302 is configured to store received booking conditions (starting date, returning date, starting location, destination, party member count, necessary room count, airline company, and airline seat class) for each travel booking.

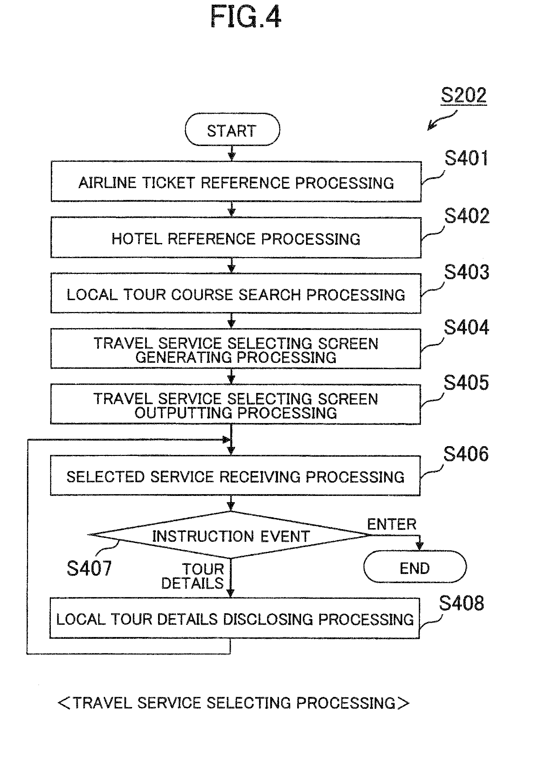

A travel service selecting section 303 of FIG. 3 executes the travel service selecting processing (S202) of FIG. 2. Details of the travel service selecting processing (S202) are described. FIG. 4 is a diagram illustrating the flow of the travel service selecting processing. The travel service selecting section 303 checks airline tickets available for reservation in airline ticket reference processing (S401), checks hotels available for reservation in hotel reference processing (S402), searches for local tours available for booking in local tour course search processing (S403), generates a travel service selecting screen, which prompts the customer to select an airline ticket, a hotel, and a local tour, in travel service selecting screen generating processing (S404), and sends the travel service selecting screen to the customer terminal 103 in travel service selecting screen outputting processing (S405). The travel service selecting section 303 then receives a selected airline ticket, hotel, and local tour, or an instruction to disclose details of local tours, in selected service receiving processing (S406). The travel service selecting section 303 receives from the customer terminal 103 an instruction event as a result of the customer operating the travel service selecting screen that is displayed on the browser of the customer terminal 103 (S407). When the received instruction event is the selection of a tour details icon, tour details information is disclosed in local tour details disclosing processing (S408). When the received instruction event is the selection of an "enter" icon, the travel service selecting section 303 ends the travel service selecting processing.

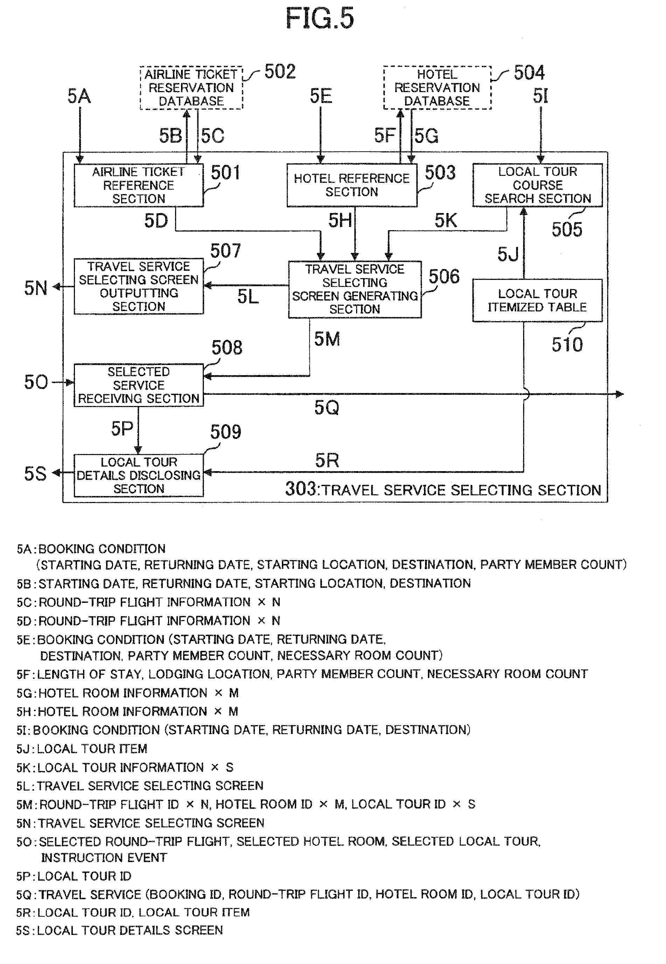

FIG. 5 is a diagram illustrating the configuration of the travel service selecting section. In FIG. 5, 5A is "BOOKING CONDITION (STARTING DATE, RETURNING DATE, STARTING LOCATION, DESTINATION, PARTY MEMBER COUNT) ", 58 is "STARTING DATE, RETURNING DATE, STARTING LOCATION, DESTINATION", 5C is "ROUND-TRIP FLIGHT INFORMATION × N", 5D is "ROUND-TRIP FLIGHT INFORMATION × N", 5E is "BOOKING CONDITION (STARTING DATE, RETURNING DATE, DESTINATION, PARTY MEMBER COUNT, NECESSARY ROOM COUNT)", 5F is "LENGTH OF VISIT, LODGING LOCATION, PARTY MEMBER COUNT, NECESSARY ROOM COUNT", 5G is "HOTEL ROOM INFORMATION × M", 5H is "HOTEL ROOM INFORMATION × M", 5I is "BOOKING CONDITION (STARTING DATE, RETURNING DATE, DESTINATION)", 5J is "LOCAL TOUR ITEM", 5K is "LOCAL TOUR INFORMATION × S", 5L is "TRAVEL SERVICE SELECTING SCREEN", 5M is "ROUND-TRIP FLIGHT ID × N, HOTEL ROOM × M, LOCAL TOUR ID × S", 5N is "TRAVEL SERVICE SELECTING SCREEN", 5O is "SELECTED ROUND-TRIP FLIGHT, SELECTED HOTEL ROOM, SELECTED LOCAL TOUR, INSTRUCTION EVENT", 5P is "LOCAL TOUR ID", 5Q is "TRAVEL SERVICE (BOOKING ID, ROUND-TRIP FLIGHT ID, HOTEL ROOM ID, LOCAL TOUR ID)", 5R is "LOCAL TOUR ID, LOCAL TOUR ITEM", and 5S is "LOCAL TOUR DETAILS SCREEN". An airline ticket reference section 501 executes the airline ticket reference processing (S401) of FIG. 4. Specifically, the airline ticket reference section 501 obtains from the booking condition storing section 302 the starting date, the returning date, the starting location, the destination, and the party member count out of a set of booking conditions of interest, sends a round-trip flight information reference request (containing the obtained starting date, returning date, starting location, destination, and party member count) to an airline ticket reservation database 502, and obtains information on candidate round-trip flights. Round-trip flight information contains an outward flight ID and a return flight ID which identify outward and return flights.

The airline ticket reference section 501 searches the airline ticket reservation database 502 for flights that leave airports in the starting location of the reference request at the starting date of the reference request for airports in the destination of the reference request and, when a found flight has as many vacant seats as the party member count (excluding infants) of the reference request, determines the flight as an available outward flight. The airline ticket reference section 501 also searches the airline ticket reservation database 502 for flights that leave airports in the destination of the reference request at the returning date of the reference request for airports in the starting location of the reference request and, when a found flight has as many vacant seats as the party member count (excluding infants) of the reference request, determines the flight as an available return flight. The airline ticket reference section 501 combines one of available outward flights with one of available return flights to create a round-trip airline ticket reservation candidate. Usually, the airline ticket reference section 501 combines flights of the same airline company. In the case where the customer includes an airline seat class in his/her booking conditions, when a found flight has necessary vacant seats in the specified airline seat class, the airline ticket reference section 501 determines the flight as an available outward or return flight. In the case where the customer includes an airline company in his/her booking conditions, the airline ticket reference section 501 create candidates only from flights of the specified airline company. The airline ticket reference section 501 then obtains from the airline ticket reservation database 502 flight information of a round-trip flight candidate which contains an airline company name, a flight name, an airline seat class, a departure date/time, a departure location, an arrival date/time, and an arrival location. In the example of FIG. 5, N pieces of round-trip flight information are retrieved as information on candidate flights.

The airline ticket reservation database 502 is configured to: store flight information of each flight which contains an airline company name, a flight name, a departure date/time, a departure location, an arrival date/time, an arrival location, a seat class-based vacancy state, and the like; and to send flight information and the vacancy state of the flight in response to a reference request that specifies a flying date, a departure location, and an arrival location. The airline ticket reservation database 502 is usually located outside of a local tour booking system and configured to connect to the system via a network such as the Internet or a dedicated line.

A hotel reference section 503 executes the hotel reference processing (S402) of FIG. 4. Specifically, the hotel reference section 503 obtains from the booking condition storing section 302 the starting date, the returning date, the destination, the party member count, and the necessary room count out of a set of booking conditions of interest, sends a hotel room information reference request (containing the length of stay, the lodging location, the party member count, and the necessary room count) to a hotel reservation database 504, and obtains information on candidate hotel rooms. The length of stay is counted from the obtained starting date (check-in) to the obtained returning date (check-out) of the reference request. The lodging location is the obtained destination. Hotel room information contains a hotel room ID which identifies a hotel room.

The hotel reference section 503 searches the hotel reservation database 504 for a room available for the length of stay of the reference request, and conducts the search for each hotel located in the obtained destination. When the search finds a hotel in the destination that has as many available rooms as the necessary room count of the reference request, the hotel reference section 503 chooses the rooms as candidates. The hotel reference section 503 then obtains hotel room information of the candidate rooms which contains a hotel name, a hotel rank, a room type, meals included, whether the bathroom is en-suite or not, and the like. In the example of FIG. 5, M pieces of hotel room information are retrieved as information on candidate hotel rooms.

The hotel reservation database 504 is configured to store, for each hotel, the name of the hotel and the rank of the hotel and, for each lodging date, information on an available room which includes a room type, meals served, and whether the bathroom is en-suite or not. The hotel reservation database 504 is configured to send available hotel room information in response to a reference request that specifies the length of stay, the lodging location, and the necessary room count. The hotel reservation database 504 is usually located outside of the local tour booking system and configured to connect to the system via a network such as the Internet or a dedicated line.

A local tour itemized table 510 has a record created for each local tour in advance, and is configured to store a local tour ID (for example, TR001), an open period (for example, 4/1/2009-4/30/2009), a guided area (for example, AR001 (Seoul)), the length of visit (for example, three-day, two-night trip), a local tour name (for example, "Korean barbecue and Korean stars tour"), the amount of tour guide fee (for example, 150,000 won), and the tour price (for example, 25,000 yen) in association with guide schedule information. As the guided area, a code identifying an area through which the customer is guided in the local tour, or a name of the area, is stored. The tour price paid by the customer is usually set by the travel agency. A guide schedule includes a hotel leaving time, a hotel arrival time, and an activity plan. The activityplan is configured to include, for each itemof a sequence of activities, an activity type, activity specifics, and an activity period. For example, scheduled activity items are stored as follows. For the first activity, "traveling" is stored as the activity type, "traveling by bus" is stored as the activity specifics, and "9:00-10:00" is stored as the activity period. For the second activity, "stop" is stored as the activity type, "oo land" is stored as the activity specifics, and "10 : 00-12 : 00" is stored as the activity period. For the third activity, "traveling" is storedas the activity type, "traveling on foot" is stored as the activity specifics, and "12:00-12:15" is stored as the activity period. For the fourth activity, "meal" is stored as the activity type, "xx restaurant" is stored as the activity specifics, and "12:15-13:30" is stored as the activity period.

A local tour course search section 505 executes the local tour course search processing (S403) of FIG. 4. Specifically, the local tour course search section 505 obtains from the booking condition storing section 302 the starting date, the returning date, and the destination out of a set of booking conditions of interest, and calculates the length of visit by subtracting the starting date from the returning date and adding a day to the difference, thereby determining the length of visit. The local tour course search section 505 then searches the local tour itemized table 510 for a local tour whose open period includes the obtained starting date, whose length of visit matches the calculated length of visit, and whose guided area matches the obtained destination. Each local tour itemized record contains a local tour ID which identifies a local tour.

A travel service selecting screen generating section 506 generates, in the travel service selecting screen generating processing (S404) of FIG. 4, a travel service selecting screen that includes an airline ticket reservation selecting area, a local tour booking selecting area, and a hotel reservation selecting area.

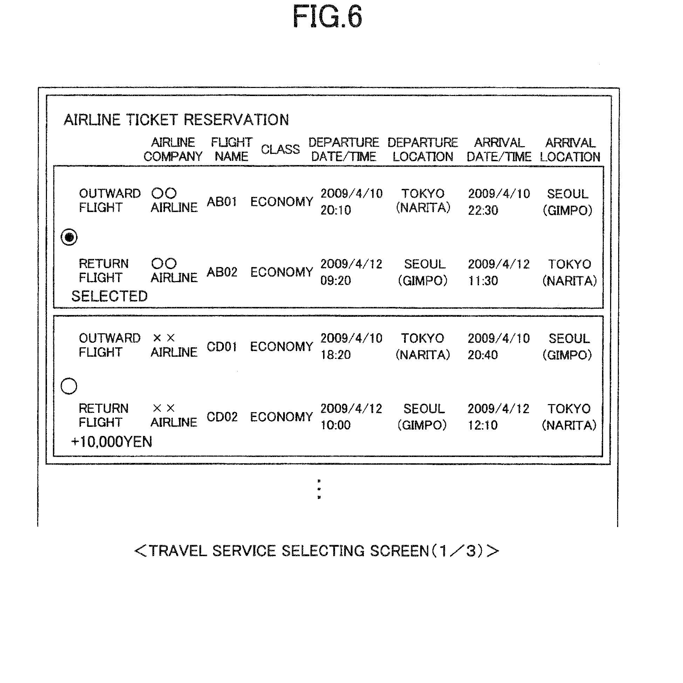

FIG. 6 is a diagram illustrating the airline ticket reservation selecting area which is a constituent of the travel service selecting screen. The airline ticket reservation selecting area is configured to display flight information of a plurality of round-trip flights as candidate flights, thereby prompting the customer to choose one of the round-trip flights. The travel service selecting screen generating section 506 also generates the travel service selecting screen such that the round-trip flight ID of a candidate flight that is chosen in the selecting area displayed on the browser of the customer terminal 103 is transferred to the travel agency server 101 as information for identifying a reserved airline ticket.

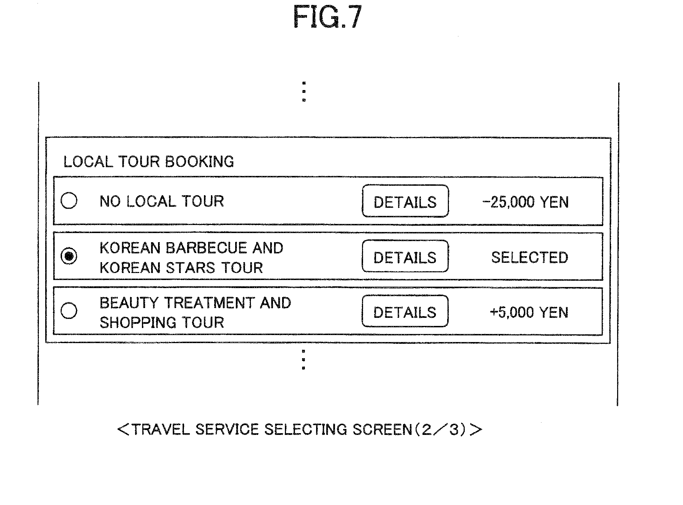

FIG. 7 is a diagram illustrating the local tour booking selecting area which is a constituent of the travel service selecting screen. The local tour booking selecting area is configured to display a no-local tour option and a plurality of local tour names as candidate local tours, thereby prompting the customer to choose the no-local tour option or one of the local tours. The travel service selecting screen generating section 506 also generates the travel service selecting screen such that the local tour ID of a candidate local tour that is chosen in the selecting area displayed on the browser of the customer terminal 103 is transferred to the travel agency server 101 as information for identifying a booked local tour. In generating the travel service selecting screen, the travel service selecting screen generating section 506 allocates a local tour ID to the no-local tour option as well, and this ID indicates that the customer requests no local tour. The travel service selecting screen generating section 506 operates to disclose tour details when a details event is selected.

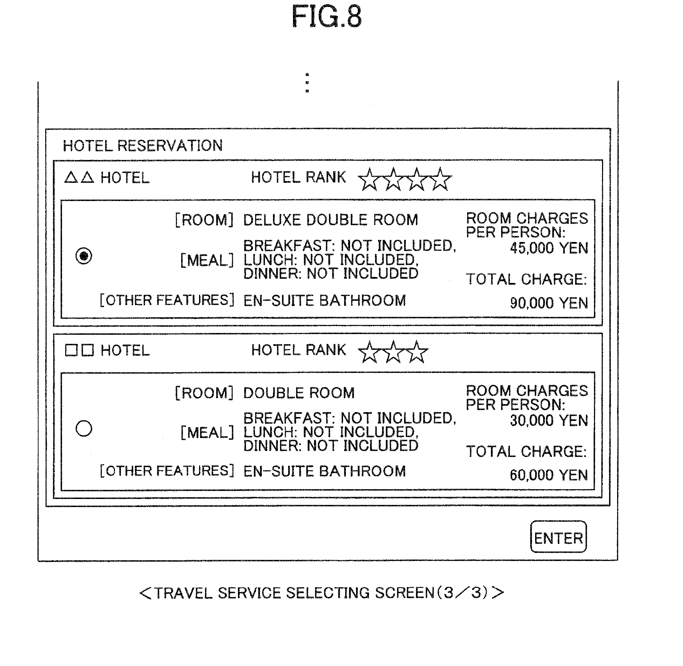

FIG. 8 is a diagram illustrating the hotel reservation selecting area which is a constituent of the travel service selecting screen. The hotel reservation selecting area is configured to display hotel room information of a plurality of hotels as hotel room candidates, thereby prompting the customer to choose one of the hotel rooms. The travel service selecting screen generating section 506 also generates the travel service selecting screen such that the hotel room ID of a candidate hotel room that is chosen in the selecting area displayed on the browser of the customer terminal 103 is transferred to the travel agency server 101 as information for identifying a reserved hotel room.

A travel service selecting screen outputting section 507 of FIG. 5 transmits the thus configured travel service selecting screen to the customer terminal 103 in the travel service selecting screen outputting processing (S405) of FIG. 4. The transmitted travel service selecting screen is displayed on the browser of the customer terminal 103, and indication of selected items or instruction events are received via the displayed travel service selecting screen.

A selected service receiving section 508 executes the selected service receiving processing (S406) of FIG. 4. Specifically, when one of candidate flights is chosen in the airline ticket reservation selecting area of FIG. 6, the selected service receiving section 508 receives the round-trip flight ID of the chosen flight and stores the received round-trip flight ID in a travel booking table 306. When one of candidate local tours is chosen in the local tour booking selecting area of FIG. 7, the selected service receiving section 508 receives the local tour ID of the chosen tour and stores the received local tour ID in the travel booking table 306. When one of candidate hotel rooms is chosen in the hotel reservation selecting area of FIG. 8, the selected service receiving section 508 receives the hotel room ID of the chosen room and stores the received hotel room ID in the travel booking table 306. Through these processing steps, a round-trip flight ID, local tour ID, and hotel room ID for identifying a selected travel service are stored in a travel service storing section 304 of FIG. 3.

A local tour details disclosing section 509 executes the local tour details disclosing processing (S408) of FIG. 4. Specifically, when one of details icons of FIG. 7 is selected on the travel service selecting screen and a tour details instruction event is received as a result, the local tour details disclosing section 509 receives the ID of a local tour that is currently selected from the selected service receiving section 508, obtains a record of the local tour itemized table 510 that is associated with the received local tour ID, generates a local tour details screen that displays a local tour name and guide schedule extracted from the obtained record of the local tour itemized table 510, and sends the generated screen to the customer terminal 103. The customer can check details of the local tour on this screen.

A travel booking accepting section 305 of FIG. 3 executes the travel booking accepting processing (S203) of FIG.2. Specifically, the travel booking accepting section 305 first obtains a round-trip flight ID from the travel service storing section 304, and obtains round-trip flight information that is associated with the received round-trip flight ID from the airline ticket reference section 501 of FIG. 5. The travel booking accepting section 305 next obtains a hotel room ID from the travel service storing section 304, and obtains hotel room information that is associated with the received hotel room ID from the hotel reference section 503 of FIG. 5. The travel booking accepting section 305 then obtains a local tour ID from the travel service storing section 304, and obtains local tour information that is associated with the received local tour ID from the local tour search section 505 of FIG. 5. Thereafter, the travel booking accepting section 305 generates a travel booking screen which displays: the airline company name, flight name, seat class, departure date/time, departure location, arrival date/time, and arrival location of the round-trip flight; the local tour name of the local tour; and the hotel name, hotel rank, room type, meals served, and presence or absence of en-suite bathroom of the hotel room. The travel booking screen prompts the customer to check the displayed travel service and to enter participant information (information on each participant which includes whether the participant is an adult or a child, and the name (in alphabet), gender, and birth date of the participant). The travel booking screen generated to accept travel booking is sent to the customer terminal 103. When an instruction to book a travel is received from the customer terminal 103 where the travel booking screen is being displayed on the browser, the travel booking accepting section 305 stores travel booking information in the travel booking table 306 and stores the participant information in a participant table 307 as illustrated in FIG. 3.

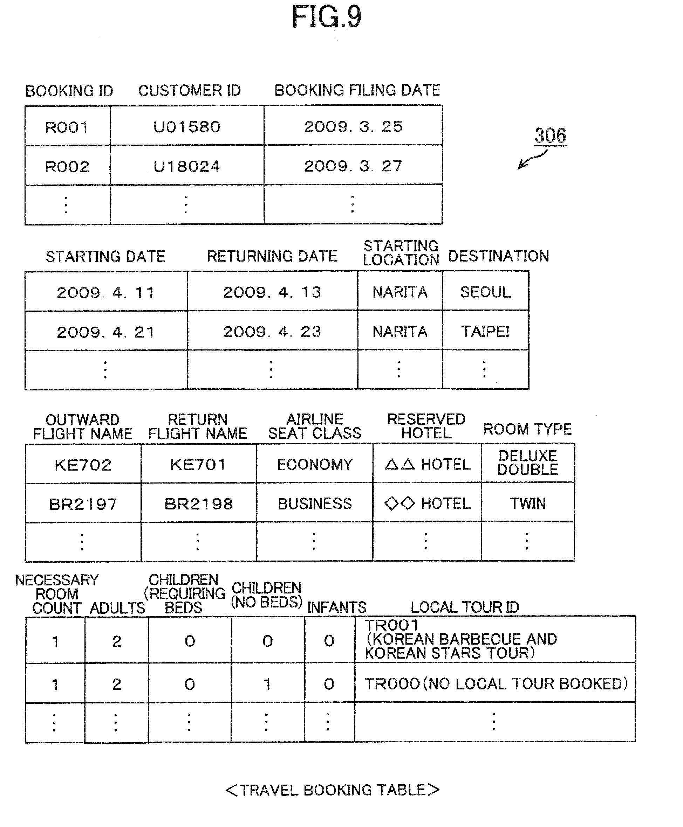

FIG. 9 is a diagram illustrating an example of the travel booking table. As a travel booking ID, a new ID is allocated by the travel booking accepting section 305 each time travel booking is made. In pre-processing (before S201) of the travel booking of FIG. 2, or the travel booking accepting processing (S203), the local tour booking system performs customer authentication, a customer ID registered in advance for a customer using the local tour booking system is identified at that stage, and the customer ID is associated with the travel booking ID. The customer ID is information for identifying a customer who books a travel. As a booking filing date, a date at which travel booking is processed is registered. A starting date, a returning date, a starting location, a destination, an airline seat class, a room count, and a participant count (adults, children (requiring beds), children (no beds), infants) are obtained from the booking condition storing section 302 and stored in the travel booking table 306. As an outward flight name and a return flight name, flight names contained in round-trip flight information are registered. A reserved hotel and a room type in the travel booking table 306 are obtained from hotel room information.

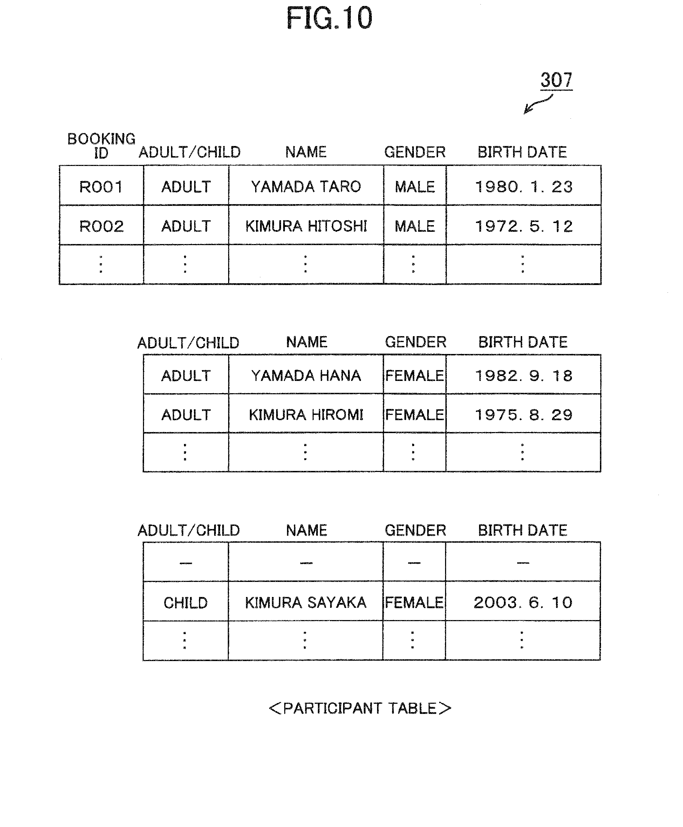

FIG. 10 is a diagram illustrating an example of the participant table. The participant table 307 is configured to have a record for each travel booking, and stores in each record a travel booking ID and participant information of each participant (whether the participant is an adult or a child, the name, gender, and birth date of the participant).

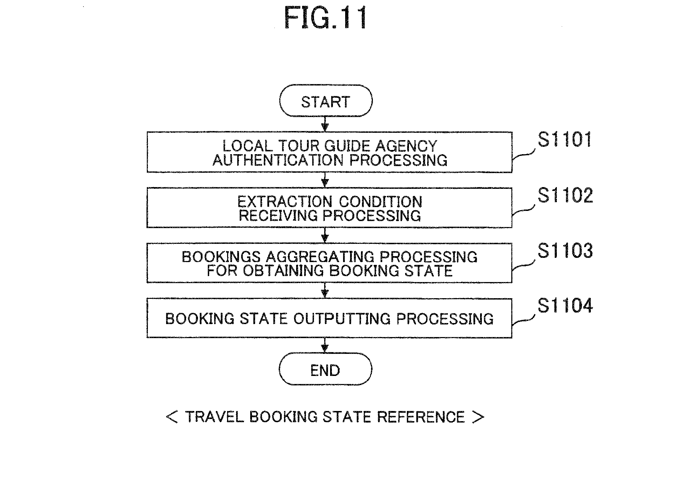

The processing (B) "reference made by a local tour guide agency to travel booking state" is described next with reference to FIGS. 11 to 20.

FIG. 11 is a diagram illustrating the flow of travel booking state reference processing which is executed by the travel agency server. The travel agency server 101 authenticates a local tour guide agency in local tour guide agency authentication processing (S1101), receives conditions for extracting a booking state in extraction condition receiving section (S1102), aggregates travel bookings under the extraction conditions in bookings aggregating processing for obtaining the booking state (S1103), and transfers the booking state obtained by the aggregation to the local tour guide agency terminal 102 in booking state outputting processing (S1104).

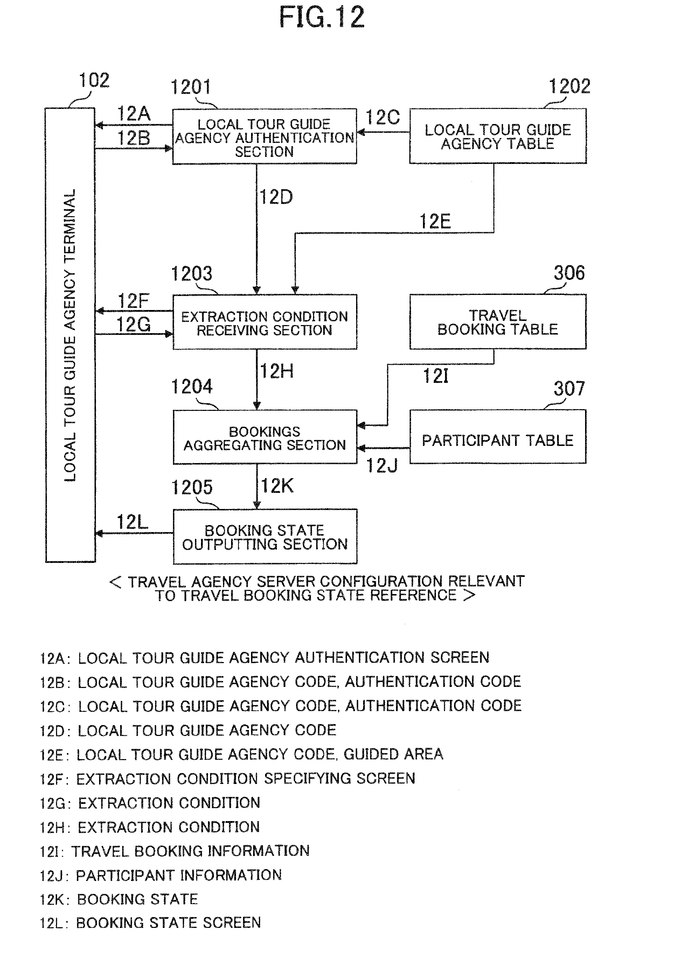

FIG. 12 is a diagram illustrating a travel agency server configuration that is relevant to travel booking state reference. In FIG. 12, 12A is "LOCAL TOUR GUIDE AGENCY AUTHENTICATION SCREEN", 12B is "LOCAL TOUR GUIDE AGENCY CODE, AUTHENTICATION CODE", 12C is "LOCAL TOUR GUIDE AGENCY CODE, AUTHENTICATION CODE", 12D is "LOCAL TOUR GUIDE AGENCY CODE", 12E is "LOCAL TOUR GUIDE AGENCY CODE, GUIDED ARENA", 12F is "EXTRACTION CONDITION SPECIFYING SCREEN", 12G is "EXTRACTION CONDITION", 12H is "EXTRACTION CONDITION", 12I is "TRAVEL BOOKING INFORMATION", 12J is "PARTICIPANT INFORMATION", 12K is "BOOKING STATE", and 12L is "BOOKING STATE SCREEN". A local tour guide agency authentication section 1201 executes the local tour guide agency authentication processing (S1101) of FIG. 11. Specifically, the local tour guide agency authentication section 1201 sends a local tour guide agency authentication screen to the local tour guide agency terminal 102. The local tour guide agency authentication screen prompts the local tour guide agency to enter a local tour guide agency code (local tour guide agency identification information) that identifies this particular local tour guide agency and an authentication code that is confidential to all but the local tour guide agency. The local tour guide agency authentication section 1201 receives a local tour guide agency code and an authentication code that are entered in the local tour guide agency authentication screen displayed on the browser of the local tour guide agency terminal 102, searches a local tour guide agency table (tour guide agency table) 1202 for a combination of a local tour guide agency code and an authentication code that matches the received local tour guide agency code-authentication code combination. The local tour guide agency authentication section 1201 determines that the local tour guide agency is successfully authenticated when a matching combination is found and, when there is no matching combination, determines that the local tour guide agency is unsuccessfully authenticated. In short, the local tour guide agency authentication section 1201 functions as an identification information receiving section which receives a local tour guide agency code (local tour guide agency identification information) sent from the local tour guide agency terminal device 102.

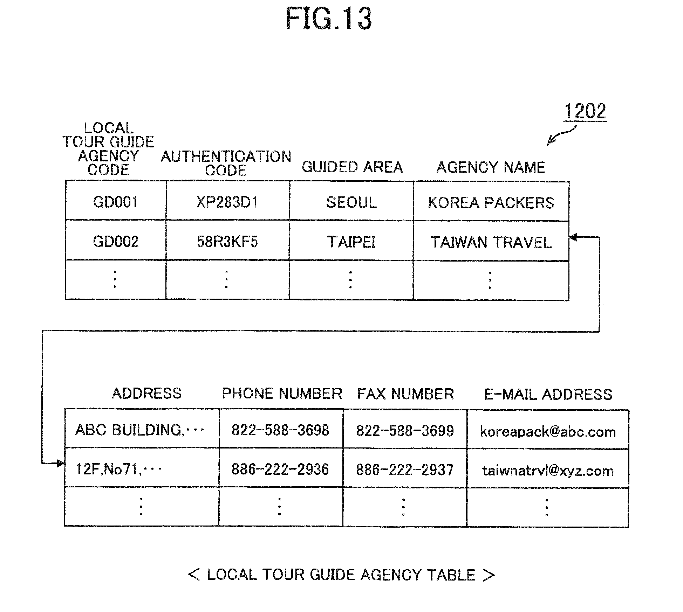

FIG. 13 is a diagram illustrating an example of the local tour guide agency table 1202. The local tour guide agency table 1202 has a record for each local tour guide agency and is configured to store a local tour guide agency code, an authentication code, a guided area, an agency name, an address, a phone number, a fax number, and an e-mail address in each record in association with one another. As the guided area, a code for identifying an area through which a local tour guide agency guides a customer, or the name of the area, is stored. The local tour guide agency authentication section 1201 also functions as a guided area search section which searches the local tour guide agency table 1202 for a local tour guide agency that is associated with a received local tour guide agency code, and for a guided area of this tour guide agency.

An extraction condition receiving section 1203 of FIG. 12 executes the extraction condition receiving processing (S1102) of FIG. 11. Specifically, the extraction condition receiving section 1203 sends an extraction condition specifying screen which prompts the local tour guide agency to enter booking state extraction conditions to the local tour guide agency terminal 102, and receives booking state extraction conditions that are entered in the extraction condition specifying screen displayed on the browser of the local tour guide agency terminal 102.

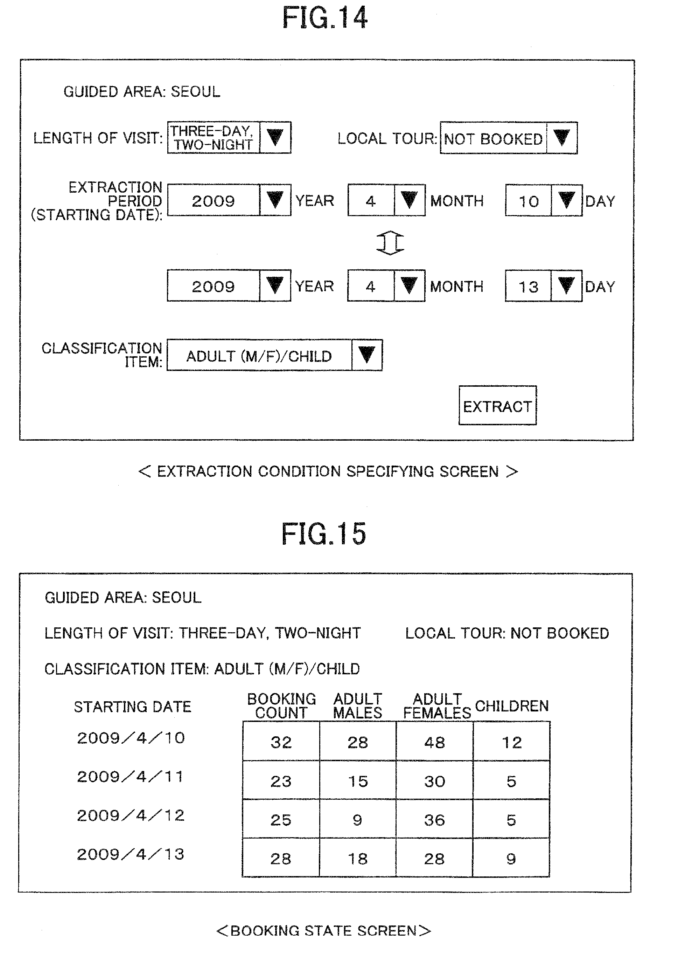

FIG. 14 is a diagram illustrating an example of the extraction condition specifying screen. The extraction condition receiving section 1203 reads a guided area that is associated with an authenticated local tour guide agency code out of the local tour guide agency table 1202 to set the guided area as an extraction condition item and to display the guided area on the extraction condition specifying screen. The extraction condition specifying screen is configured such that the length of visit, whether local tour booking is included or not, an extraction period, and a classification item can be selected from options (or entered). The length of visit is a visiting period measured in days, such as a two-day, one-night trip, a three-day, two-night trip, or a four-day, three-night trip. When "not included" is selected as the local tour booking inclusion condition, only travel bookings that do not include a local tour (i.e., travel bookings that include airline ticket-hotel reservation alone) are counted. When "included" is selected as the local tour booking inclusion condition, only travel bookings that include a local tour (i.e., travel bookings that include local tour booking in addition to airline ticket-hotel reservation) are counted. When "all" is selected as the local tour booking inclusion condition, all travel bookings are counted irrespective of whether a travel booking includes a local tour or not. The "extraction period" condition is set to count in any travel booking whose starting date falls between the first day and last day of the extraction period. As the classification item, fine classifications of travel bookings are set. In this example, where "adult (M/F)/child" is selected as the classification item, participants in travel bookings to be extracted are sorted to obtain the aggregated adult male count, the aggregated adult female count, and the aggregated child count.

FIG. 15 is a diagram illustrating an example of a booking state screen that has adult (M/F)/child as a classification item. When adult (M/F)/child is selected as a classification item, the booking state screen displays a guided area, whether local tour booking is included or not, the length of visit, and a classification item, and displays, for each starting date, the number of extracted bookings and the number of adult male participants, the number of adult female participants, and the number of child participants that are included in the extracted bookings of that starting date.

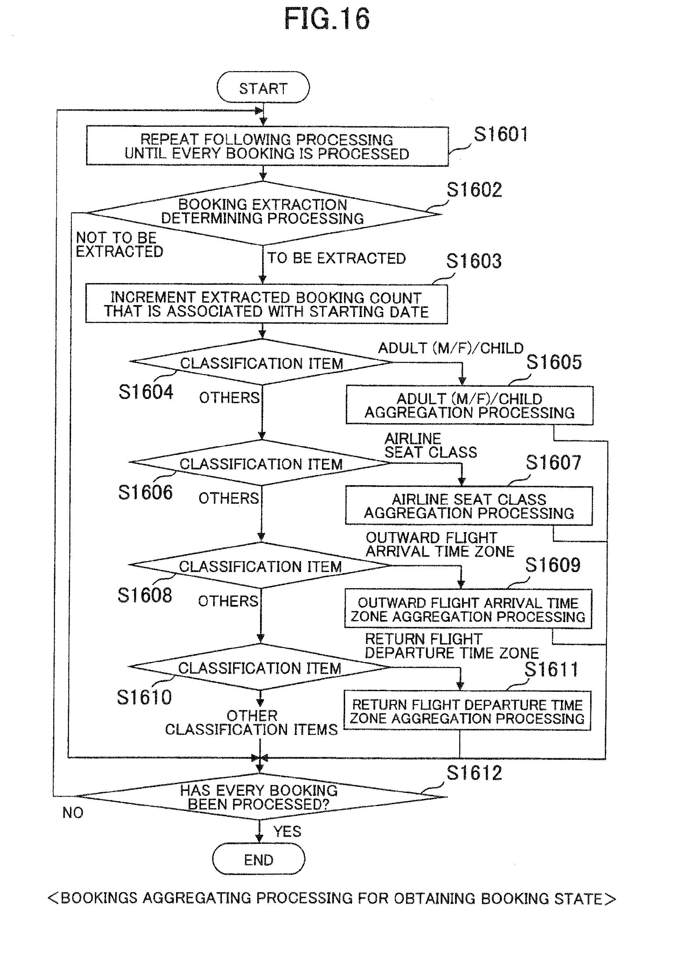

In order to generate this booking state screen, the bookings aggregating processing for obtaining the booking state (S1103) of FIG. 11 is executed by a bookings aggregating section 1204 of FIG. 12. FIG. 16 is a diagram illustrating the flow of the bookings aggregating processing for obtaining the booking state. The following processing is repeated (S1601) until every booking stored in the travel booking table 306 is processed. The bookings aggregating section 1204 determines whether or not the current booking meets extraction conditions in booking extraction determining processing (S1602). The bookings aggregating section 1204 determines that the current booking should be extracted when the booking meets the extraction conditions and, when the current booking does not meet the extraction conditions, determines that the booking should not be extracted. The booking extraction determining processing (S1602) is described below in detail.

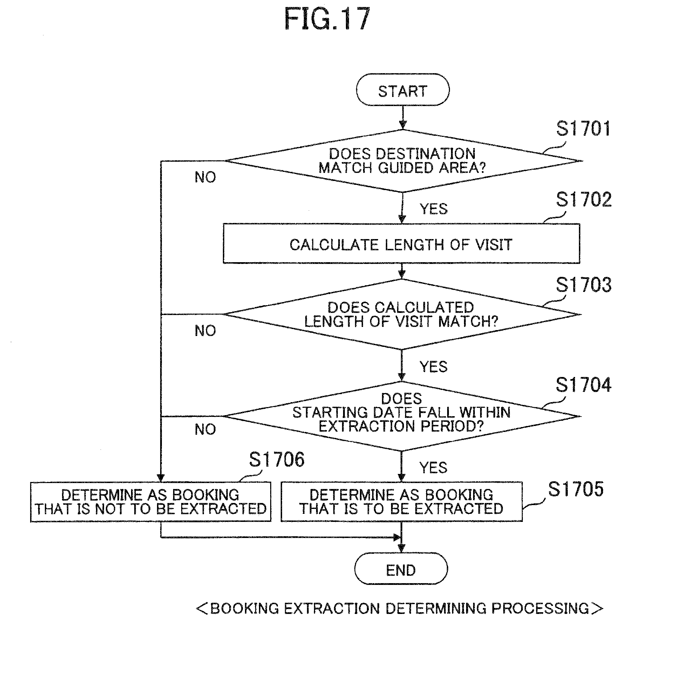

FIG. 17 is a diagram illustrating the flow of the booking extraction determining processing. The bookings aggregating section 1204 first determines whether or not the destination of the currently selected booking that is found in the travel booking table 306 of FIG. 9 matches the guided area of the extraction conditions (S1701). When the destination does not match the guided area, the bookings aggregating section 1204 determines that the current booking should not be extracted (S1706). When the destination matches the guided area, the bookings aggregating section 1204 obtains the returning date and starting date of this booking from the travel booking table 306, subtracts the starting date from the returning date of the booking to obtain the difference, and adds one day to the difference to calculate the length of visit measured in days (S1702). The bookings aggregating section 1204 then determines whether or not the calculated length of visit of the current booking matches the length of visit of the extraction conditions (S1703). When the two do not match, the bookings aggregating section 1204 determines that the current booking should not be extracted (S1706). When the two match, the bookings aggregating section 1204 determines whether or not the starting date of the current booking is included in the extraction period of the extraction conditions (S1704). When the starting date is included in the extraction period, the bookings aggregating section 1204 determines that the current booking should be extracted (S1705). When the starting date is not included in the extraction period, the bookings aggregating section 1204 determines that the current booking should not be extracted (S1706).

When it is determined in the booking extraction determining processing (S1602) of FIG. 16 that the currently selected booking should not be extracted as described above, the bookings aggregating section 1204 finishes processing this booking and moves on to S1612. When it is determined in S1602 that the current booking should be extracted, the bookings aggregating section 1204 increments (adds 1 to) the number of bookings extracted in association with the starting date of the current booking (S1603). The extracted booking count is a parameter provided for each day (each starting date) in the extraction period of the extraction conditions to be stored internally, and has 0 as the initial value.

Aggregation processing is executed next for each classificationitem. Thisembodimentdescribesa casein which adult (M/F) /child is selected as a classification item. As shown in S1604 of FIG. 16, adult (M/F)/child aggregation processing (S1605) is executed when "adult (M/F)/child" is the selected classification item.

In the adult (M/F) /child aggregation processing (S1605), the bookings aggregating section 1204 identifies a participant information group in the participant table 307 of FIG. 10 that is associated with the booking ID of the current booking. The bookings aggregating section 1204 repeats the following processing until every piece of participant information in the identified group is processed. When the currently processed participant information is of a participant classified as a child, the bookings aggregating section 1204 increments (adds 1 to) a child count that is associated with the starting date. The child count is a parameter provided for each day (each starting date) in the extraction period of the extraction conditions to be stored internally, and has 0 as the initial value. When the currently processed participant information is of a participant classified as an adult, the bookings aggregating section 1204 further determines the gender of the participant and increments (adds 1 to) an adult male count that is associated with the starting date in the case where the participant is an adult male. In the case where the participant is determined as an adult female, the bookings aggregating section 1204 increments (adds 1 to) an adult female count that is associated with the starting date. The adult male count and the adult female count are each a parameter provided for each day (each starting date) in the extraction period of the extraction conditions to be stored internally, and has 0 as the initial value. At the time this repetitive processing is finished for all participants, the bookings aggregating section 1204 ends the processing.

The bookings aggregating section 1204 ends the bookings aggregatingprocessing (S1103) at the time every booking is processed as illustrated in FIG. 16. The booking state outputting processing (S1104) is executed next by a booking state outputting section 1205.

In this manner, the bookings aggregating section 1204 functions as a booking information search section which uses a guided area as an extraction condition to search the travel booking table 306 for travel booking information that at least contains a travel destination matching the guided area. The bookings aggregating section 1204 also functions as an aggregation section which aggregates pieces of travel booking information found as a result of the search.

The booking state outputting processing (S1104) generates a booking state screen that displays aggregation results obtained through the bookings aggregating processing (S1103) described above, along with a guided area, the length of visit, whether local tour booking is included or not, and a classification item. The generated booking state screen is sent to the local tour guide agency terminal 102 in response. In this example, parameters arranged in the booking state screen include the number of bookings, the number of adult male participants, the number of adult female participants, and the number of child participants that are counted for each starting date. The booking state outputting section 1205 functions as an output section which sends a result of travel booking information aggregation executed by the bookings aggregating section 1204 to the local tour guide agency terminal 102.

A local tour guide agency can thus know a transition in the number of travel bookings that have the agency's guided area as a destination and, in addition, basic data of participants such as whether the participant is an adult or a child and whether the participant is a male or a female. This enables the local tour guide agency to plan and organize optional tours that exactly suit customers' needs.

### [Second Embodiment]

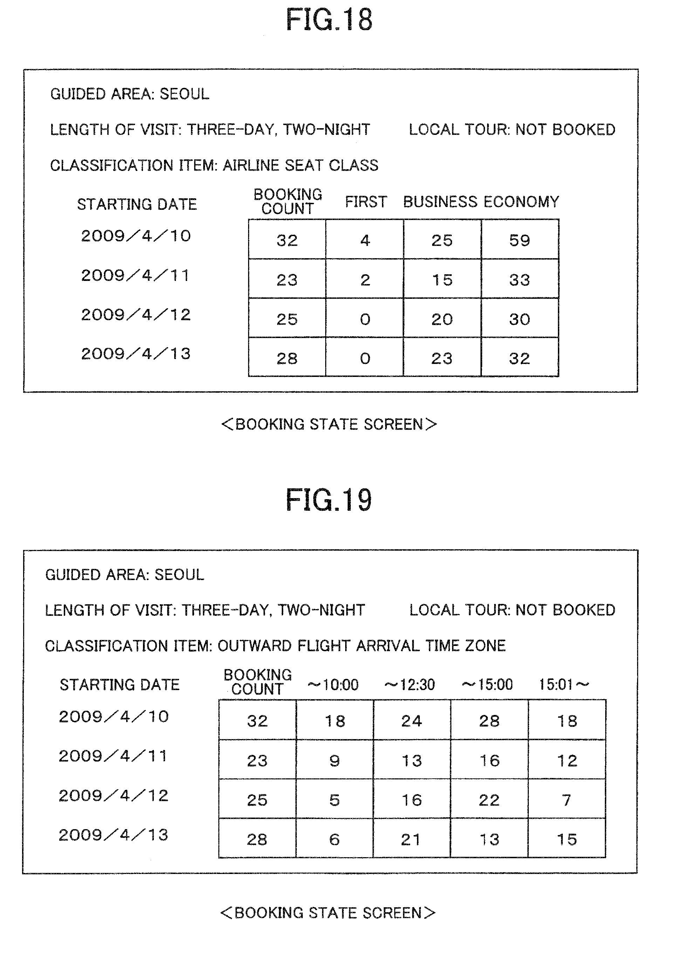

A second embodiment of the present invention describes a case in which airline seat class is selected as a classification item on the extraction condition specifying screen of FIG. 14. FIG. 18 is a diagram illustrating an example of a booking state screen that has airline seat class as a classification item. The booking state screen displays the number of participants reserving first-class seats, the number of participants reserving business-class seats, and the number of participants reserving economy-class seats that are counted for each starting date.

When the selected classification item is airline seat class (S1606), airline seat class aggregation processing (S1607) is executed as illustrated in FIG. 16. The bookings aggregating section 1204 obtains from the travel booking table 306 of FIG. 9 the adult count and the child count (of children requiring separate beds and of children requiring no separate beds) that are registered for the currently selected booking, and calculates the total partymember count. The bookings aggregating section 1204 also obtains the airline seat class of the current booking from the travel booking table 306. When the obtained airline seat class is the first class, the bookings aggregating section 1204 adds the total party member count to a first-class participant count that is associated with the starting date of the current booking. When the obtained airline seat class is the business class, the bookings aggregating section 1204 adds the total partymember count to a business-class participant count that is associated with the starting date of the current booking. When the obtained airline seat class is the economy class, the bookings aggregating section 1204 adds the total party member count to an economy-class participant count that is associated with the starting date of the current booking. The first-class participant count, the business-class participant count, and the economy-class participant count are each a parameter provided for each day (each starting date) in the extraction period of the extraction conditions to be stored internally, and has 0 as the initial value.

The booking state outputting processing (S1104) generates the booking state screen that displays aggregation results obtained through the bookings aggregating processing (S1103) described above, along with a guided area, the length of visit, whether local tour booking is included or not, and a classification item. The generated booking state screen is sent to the local tour guide agency terminal 102 in response. When the selected classification item is airline seat class, parameters arranged in the booking state screen include the number of bookings, the first-class participant count, the business-class participant count, and the economy-class participant count that are counted for each starting date.

A local tour guide agency can thus know a transition in the number of travel bookings that have the agency's guided area as a destination and, in addition, estimate the parchasing power, the trends in purpose of visit, and the like of the participants.

### [Third Embodiment]

A third embodiment of the present invention describes a case in which outward flight arrival time zone is selected as a classification item on the extraction condition specifying screen of FIG. 14. FIG. 19 is a diagram illustrating an example of a booking state screen that has outward flight arrival time zone as a classification item. The booking state screen displays, for each starting date and for each time zone, the number of participants who will arrive at some point in the time zone. In this example, the first arrival time to 10:00 is a first outward flight arrival time zone, 10:01 to 12:30 is a second outward flight arrival time zone, 12:31 to 15:00 is a third outward flight arrival time zone, and 15: 01 to the last arrival time is a fourth outward flight arrival time zone.

When the selected classification item is outward flight arrival time zone (S1608), outward flight arrival time zone aggregation processing (S1609) is executed as illustrated in FIG. 16. The bookings aggregating section 1204 obtains from the travel booking table 306 the adult count and the child count (of children requiring separate beds and of children requiring no separate beds) that are registered for the currently selected booking, and calculates the total party member count. The bookings aggregating section 1204 also obtains the outward flight name of the current booking from the travel booking table 306 to determine the arrival time of the outward flight. The arrival time is determined by, for example, making an arrival time inquiry that specifies the outward flight name to the airline ticket reservation database 502 of FIG. 5. Alternatively, an arrival time that is contained in outward flight information obtained by the travel service selecting section 303 from the airline ticket reservation database 502 may be stored in advance in the travel booking table 306 by the travel booking accepting section 305 as an outward flight arrival time, so that the bookings aggregating section 1204 reads the stored arrival time. The bookings aggregating section 1204 identifies an outward flight arrival time zone that includes the obtained arrival time, and adds the total party member count to the participant count of the identified outward flight arrival time zone. The participant count of each outward flight arrival time zone is a parameter provided for each day (each starting date) in the extraction period of the extraction conditions to be stored internally, and has 0 as the initial value.

The booking state outputting processing (S1104) generates the booking state screen that displays aggregation results obtained through the bookings aggregating processing (S1103) described above, along with a guided area, the length of visit, whether local tour booking is included or not, and a classification item. The generated booking state screen is sent to the local tour guide agency terminal 102 in response. When the selected classification item is outward flight arrival time zone, parameters arranged in the booking state screen include the number of bookings and the number of participants of each outward flight arrival time zone that are counted for each starting date.

A local tour guide agency can thus know a transition in the number of travel bookings that have the agency's guided area as a destination and, in addition, obtain data stratified by arrival time, which is useful in planning a service for the first day of customers' visit.

### [Fourth Embodiment]

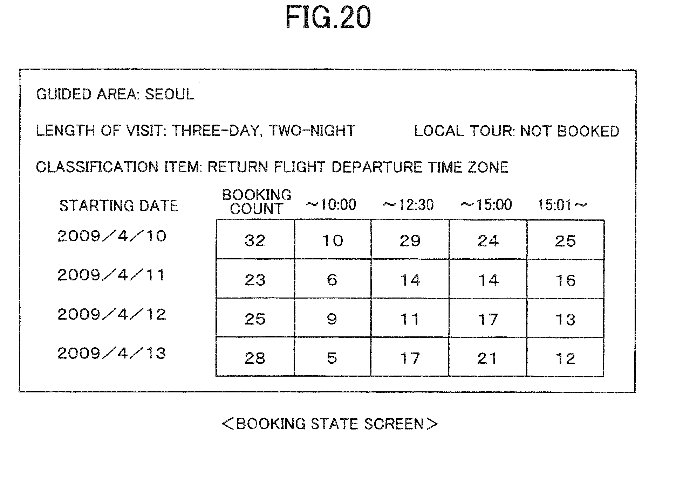

A fourth embodiment of the present invention describes a case in which return flight departure time zone is selected as a classification item on the extraction condition specifying screen of FIG. 14. FIG. 20 is a diagram illustrating an example of a booking state screen that has return flight departure time zone as a classification item. The booking state screen displays, for each starting date and for each time zone, the number of participants who will depart at some point in the time zone. In this example, the first departure time to 10:00 is a first return flight departure time zone, 10:01 to 12:30 is a second return flight departure time zone, 12:31 to 15:00 is a third return flight departure time zone, and 15:01 to the last departure time is a fourth return flight departure time zone.

When the selected classification item is return flight departure time zone (S1610), return flight departure time zone aggregation processing (S1611) is executed as illustrated in FIG. 16. The bookings aggregating section 1204 obtains from the travel booking table 306 the adult count and the child count (of children requiring separate beds and of children requiring no separate beds) that are registered for the currently selected booking, and calculates the total party member count. The bookings aggregating section 1204 also obtains the return flight name of the current booking from the travel booking table 306 to determine the departure time of the return flight. The departure time is determined by, for example, making a departure time inquiry that specifies the return flight name to the airline ticket reservation database 502 of FIG. 5. Alternatively, a departure time that is contained in return flight information obtained by the travel service selecting section 303 from the airline ticket reservation database 502 may be stored in advance in the travel booking table 306 by the travel booking accepting section 305 as a return flight departure time, so that the bookings aggregating section 1204 reads the stored departure time. The bookings aggregating section 1204 identifies a return flight departure time zone that includes the obtained departure time, and adds the total party member count to the participant count of the identified return flight departure time zone. The participant count of each return flight departure time zone is a parameter provided for each day (each starting date) in the extraction period of the extraction conditions to be stored internally, and has 0 as the initial value.

The booking state outputting processing (S1104) generates the booking state screen that displays aggregation results obtained through the bookings aggregating processing (S1103) described above, along with a guided area, the length of visit, whether local tour booking is included or not, and a classification item. The generated booking state screen is sent to the local tour guide agency terminal 102 in response. When the selected classification item is return flight departure time zone, parameters arranged in the booking state screen include the number of bookings and the number of participants of each return flight departure time zone that are counted for each starting date.

A local tour guide agency can thus know a transition in the number of travel bookings that have the agency's guided area as a destination and, in addition, obtain data stratified by departure time, which is useful in planning a service for the last day of customers' visit.

The first to fourth embodiments are particularly notable in that participant numbers stratified according to various viewpoints are obtained as data. Customers' needs, which are difficult to predict just from the total number of participants, can be grasped in this manner.

The travel agency server is a computer, and various processing steps executed by the travel agency server may be implemented by a processor installed in the computer by running programs that are stored in storage means (a memory, a magnetic disk, or the like). The processor may also use a program that is recorded in a storage medium and read from the storage medium onto the computer.

The present invention is applicable not only to cases where the destination and the starting location are in different countries but also to cases where the destination and the starting location are in the same country.

## Claims

1. A booking information aggregating device connected to a terminal device, comprising:
an identification information receiving section for receiving identification information of an optional tour agency which is sent from the terminal device;
an area search section for searching an optional tour agency table for an optional tour agency that is associated with the identification information received by the identification information receiving section, and for an area of an optional tour organized by the optional tour agency, the optional tour agency table being provided inside or outside the booking information aggregating device;
a booking information search section for searching, with the area found as a result of the search by the area search section as an extraction condition, a travel booking table for travel booking information that at least contains a travel destination matching the searched area, the travel booking table being provided inside or outside the booking information aggregating device;
an aggregation section for aggregating pieces of travel booking information found as a result of the search by the booking information search section; and
an output section for sending a result of the travel booking information aggregation executed by the aggregation section to the terminal device.

2. The booking information aggregating device according to claim 1, further comprising an optional tour agency authentication section for authenticating an optional tour agency that accesses from the terminal device, and for identifying an optional tour agency code, based on the identification information received by the identification information receiving section,
wherein the travel booking table stores travel booking information including a destination,
wherein the optional tour agency table stores an optional tour agency code in association with an area of an optional tour organized by an optional tour agency, and
wherein the booking information search section reads, out of the optional tour agency table, an area that is associated with an optional tour agency code identified by the optional tour agency authentication section, and the read area is included in the extraction conditions.

3. The booking information aggregating device according to claim 1 or 2, further comprising an extraction condition receiving section for receiving extraction conditions other than an area from the terminal device.

4. The booking information aggregating device according to claim 3,
wherein the travel booking table includes optional tour booking in each piece of travel booking information,
wherein the extraction condition receiving section can set as an extraction condition booking no optional tour, and
wherein, when booking no optional tour is set as an extraction condition, the aggregation section searches the travel booking table for travel booking information that has a destination matching the searched area and that has no optional tour booked, and aggregates pieces of travel booking information that are found as a result of the search.

5. The booking information aggregating device according to claim 3,
wherein the travel booking table includes a starting date and a home arrival date in each piece of travel booking information,
wherein the extraction condition receiving section receives a length of visit as one of the extraction conditions, and
wherein the aggregation section searches the travel booking table for travel booking information whose destination matches the searched area and whose starting date and home arrival date translate into a length of visit that matches the length of visit of the extraction conditions, and aggregates pieces of travel booking information that are found as a result of the search.

6. The booking information aggregating device according to claim 3,
wherein the extraction condition receiving section can set classification among adult males, adult females, and children as a classification item, and
wherein, whenclassification amongadult males, adult females, and children is set as a classification item, the aggregation section refers to a participant table, which is provided inside or outside the booking information aggregating device to store, for each participant, in association with a piece of travel booking information, whether the participant is an adult or a child and whether the participant is a male or a female, and aggregates adult maleparticipants, adult femaleparticipants, andchildparticipants that are associated with the found pieces of travel booking information to obtain an adult male count, an adult female count, and a child count.

7. The booking information aggregating device according to claim 3,
wherein the travel booking table includes an airline seat class and a participant count in each piece of travel booking information,
wherein the extraction condition receiving section can set classification among airline seat classes as a classification item, and
wherein, when classification among airline seat classes is set as a classification item, the aggregation section aggregates, for each airline seat class contained in the found pieces of travel booking information, participants reserving the airline seat class to obtain a participant count for each airline seat class.

8. The booking information aggregating device according to claim 3,
wherein the travel booking table includes an outward flight name and a participant count in each piece of travel booking information,
wherein the extraction condition receiving section can set classification among outward flight arrival time zones as a classification item, and
wherein, when classification among outward flight arrival time zones is set as a classification item, the aggregation section determines an outward flight arrival time from an outward flight name contained in each of the found pieces of travel booking information, and aggregates participants for each outward flight arrival time zone.

9. The booking information aggregating device according to claim 3,
wherein the travel booking table includes a return flight name and a participant count in each piece of travel booking information,
wherein the extraction condition receiving section can set classification among return flight departure time zones as a classification item, and
wherein, when classification among return flight departure time zones is set as a classification item, the aggregation section determines a return flight departure time from a return flight name contained in each of the found pieces of travel booking information, and aggregates participants for each return flight departure time zone.

10. A booking information aggregating method for aggregating booking information in a network system where a booking information aggregating device and a terminal device are connected via a network, comprising:
an identification information receiving step of receiving, by way of the booking information aggregating device, identification information of an optional tour agency which is sent from the terminal device;
an area search step of searching, by way of the booking information aggregating device, an optional tour agency table for an optional tour agency that is associated with the identification information received in the identification information receiving step, and for an area of an optional tour organized by the optional tour agency, the optional tour agency table being provided inside or outside the booking information aggregating device;
a booking information search step of searching, by way of the booking information aggregating device, with the area found as a result of the search in the area search step as an extraction condition, a travel booking table for travel booking information that at least contains a travel destination matching the searched area, the travel booking table being provided inside or outside the booking information aggregating device;
an aggregation step of aggregating, by way of the booking information aggregating device, pieces of travel booking information found as a result of the search in the booking information search step; and
an output step of sending, by way of the booking information aggregating device, a result of the travel booking information aggregation executed in the aggregation step to the terminal device.

11. A program for causing a computer which serves as a booking information aggregating device connected to a terminal device to function as:
an identification information receiving section for receiving identification information of an optional tour agency which is sent from the terminal device;
an area search section for searching an optional tour agency table for an optional tour agency that is associated with the identification information received by the identification information receiving section, and for an area of an optional tour organized by the optional tour agency, the optional tour agency table being provided inside or outside the booking information aggregating device;
a booking information search section for searching, with the area found as a result of the search by the area search section as an extraction condition, a travel booking table for travel booking information that at least contains a travel destination matching the searched area, the travel booking table being provided inside or outside the booking information aggregating device;
an aggregation section for aggregating pieces of travel booking information found as a result of the search by the booking information search section; and
an output section for sending a result of the travel booking information aggregation executed by the aggregation section to the terminal device.

12. A storage medium having recorded thereon a program for causing a computer which serves as a booking information aggregating device connected to a terminal device to function as:
an identification information receiving section for receiving identification information of an optional tour agency which is sent from the terminal device;
an area search section for searching an optional tour agency table for an optional tour agency that is associated with the identification information received by the identification information receiving section, and for an area of an optional tour organized by the optional tour agency, the optional tour agency table being provided inside or outside the booking information aggregating device;
a booking information search section for searching, with the area found as a result of the search by the area search section as an extraction condition, a travel booking table for travel booking information that at least contains a travel destination matching the searched area, the travel booking table being provided inside or outside the booking information aggregating device;
an aggregation section for aggregating pieces of travel booking information found as a result of the search by the booking information search section; and
an output section for sending a result of the travel booking information aggregation executed by the aggregation section to the terminal device.

13. A server connectable to a local tour guide agency terminal, comprising:
a travel booking table for storing travel booking information including a destination;
a local tour guide agency table for storing a local tour guide agency code in association with a guided area of a local tour organized by a local tour guide agency;
a local tour guide agency authentication section for authenticating a local tour guide agency that accesses from the local tour guide agency terminal, and for identifying a local tour guide agency code;
a bookings aggregating section for obtaining a booking state by reading a guided area that is associated with the identified local tour guide agency code from the local tour guide agency table, by searching the travel booking table under extraction conditions, which include the read guided area, for travel booking information that at least contains a destination matching the guided area, and by aggregating pieces of travel booking information that are found as a result of the search; and
a booking state outputting section for returning the booking state that is obtained as a result of the aggregation to the local tour guide agency terminal.

14. A travel booking state disclosing method executed by a server connectable to a local tour guide agency terminal and comprising: a travel booking table for storing travel booking information including a destination; and a local tour guide agency table for storing a local tour guide agency code in association with a guided area of a local tour organized by a local tour guide agency, the travel booking state disclosing method comprising:
a local tour guide agency authentication step of authenticating a local tour guide agency that accesses from the local tour guide agency terminal, and identifying a local tour guide agency code;
a bookings aggregating step of obtaining a booking state by reading a guided area that is associated with the identified local tour guide agency code from the local tour guide agency table, searching the travel booking table under extraction conditions, which include the read guided area, for travel booking information that at least contains a destination matching the guided area, and aggregating pieces of travel booking information that are found as a result of the search; and
a booking state outputting step of returning the booking state that is obtained as a result of the aggregation to the local tour guide agency terminal.

15. The travel booking state disclosing method according to claim 14, further comprising an extraction condition receiving step of receiving extraction conditions other than a guided area from the local tour guide agency terminal.

16. A program for causing a computer, which serves as a server connectable to a local tour guide agency terminal and comprising:
a travel booking table for storing travel booking information including a destination; and a local tour guide agency table for storing a local tour guide agency code in association with a guided area of a local tour organized by a local tour guide agency, to execute:
a local tour guide agency authentication procedure of authenticating a local tour guide agency that accesses from the local tour guide agency terminal, and identifying a local tour guide agency code;
a bookings aggregating procedure of obtaining a booking state by reading a guided area that is associated with the identified local tour guide agency code from the local tour guide agency table, by searching the travel booking table under extraction conditions, which include the read guided area, for travel booking information that at least contains a destination matching the guided area, and by aggregating pieces of travel booking information that are found as a result of the search; and
a booking state outputting procedure of returning the booking state that is obtained as a result of the aggregation to the local tour guide agency terminal.

17. The program according to claim 16, further causing the computer, which serves as the server, to execute an extraction condition receiving procedure of receiving extraction conditions other than a guided area from the local tour guide agency terminal.

18. A storage medium having recorded thereon a program for causing a computer, which serves as a server connectable to a local tour guide agency terminal and comprising: a travel booking table for storing travel booking information including a destination; and a local tour guide agency table for storing a local tour guide agency code in association with a guided area of a local tour organized by a local tour guide agency, to execute:
a local tour guide agency authentication procedure of authenticating a local tour guide agency that accesses from the local tour guide agency terminal, and identifying a local tour guide agency code;
a bookings aggregating procedure of obtaining a booking state by reading a guided area that is associated with the identified local tour guide agency code from the local tour guide agency table, by searching the travel booking table under extraction conditions, which include the read guided area, for travel booking information that at least contains a destination matching the guided area, and by aggregating pieces of travel booking information that are found as a result of the search; and
a booking state outputting procedure of returning the booking state that is obtained as a result of the aggregation to the local tour guide agency terminal.

19. The storage medium according to claim 18, wherein the program recorded thereon further causes the computer, which serves as the server, to execute an extraction condition receiving procedure of receiving extraction conditions other than a guided area from the local tour guide agency terminal.
